# EUROPEAN PATENT SPECIFICATION

(11) **EP 3 109 552 B1**
(45) Date of publication and mention of the grant of the patent: **25.03.2020**
(21) Application number: 16175903.0
(22) Date of filing: 23.06.2016
(51) Int. Cl.: F23R 3/10, F23R 3/54, F23R 3/28, F23R 3/34, F23R 3/26

(54) **GAS TURBINE COMBUSTOR**
GASTURBINENBRENNKAMMER
CHAMBRE DE COMBUSTION DE TURBINE À GAZ

(30) Priority: 26.06.2015 JP 2015128497
(43) Date of publication of application: 28.12.2016
(73) Proprietor: Mitsubishi Hitachi Power Systems, Ltd., Nishi-ku Yokohama 220-8401 (JP)
(72) Inventor: OKAZAKI, Hirofumi, Yokohama, 220-8401 (JP); ORII, Akihito, Yokohama, 220-8401 (JP); URUNO, Tomoki, Yokohama, 220-8401 (JP)
(74) Representative: MERH-IP Matias Erny Reichl Hoffmann Patentanwälte PartG mbB

(56) References cited:
- JP-A- 2009 192 175
- JP-A- 2012 154 587
- US-A1- 2007 199 324

## Description

### {Technical Field}

The present invention relates to a gas turbine combustor and, more particularly, to a gas turbine combustor having a flow path structure that suppresses the deviation of air flowing through the gas turbine combustor to reduce the pressure loss.

### {Background Art}

A gas turbine combustor requires not only a high environmental performance by reductions in unburnt matter and nitrogen oxide (NOx) in a combustion gas, but also an improvement in generation efficiency by reducing the pressure loss of air flowing through the gas turbine combustor.

As for the reduction in NOx, it is effective to apply the premixed combustion method for premixing a fuel and air before combustion to a gas turbine combustor. A fuel and air are mixed and the fuel is burnt in a diluted state to lower the flame temperature to reduce NOx generated at high temperatures.

When the premixed combustion method is applied to a gas turbine combustor, a fuel needs to be distributed while evenly supplying air into the gas turbine combustor to uniformly mix the fuel and the air. It is therefore, desired to provide uniform flow with less airflow deviation in the gas turbine combustor.

To suppress an airflow deviation, air desirably linearly flows in the axial direction in the gas turbine. However, linearly aligning the air flowing out of the compressor with the gas turbine combustor and even the turbine increases the axial length of the gas turbine.

Therefore, a reverse-flow gas turbine is generally used as described in Combustion Engineering Handbook, The Japan Society of Mechanical Engineers, July 1995, p. 232 (Non patent Literature 1).

In the reverse-flow gas turbine, a plurality of gas turbine combustors are arranged outside the compressor to bring the compressor and the turbine close to each other to reduce the turbine axial length.

In this case, the air flowing out of the compressor travels from the tail to head portions of the gas turbine combustor along the outer circumference of the gas turbine combustor, reverses in its airflow direction by 180° in the head portion of the gas turbine combustor, and flows into the gas turbine combustor.

As described above, the reverse-flow gas turbine includes a flow path reversing portion in which the airflow direction changes by 180° in the head portion of the gas turbine combustor. In the flow path reversing portion of the gas turbine combustor, the airflow direction considerably changes, leading to a large pressure loss. Further, airflow reversal in the flow path reversing portion easily causes flow deviation due to the inertial force of the air.

Examples of a method for reducing the pressure loss and the flow deviation include a method for increasing the flow path cross-sectional area to lower the flow velocity, and a method for mounting a resistor such as a baffle plate in the flow path or providing a guide plate that divides and guides a stream.

For example, as one of structures that suppress an airflow deviation in the flow path reversing portion of the gas turbine combustor, Japanese Patent Laid-Open No. 2007-232348 (Patent Literature 1) discloses a technique for providing a baffle plate at the entrance of the flow path reversing portion, and providing a guide plate that guides a stream to the flow path reversing portion to suppress a flow deviation when the air from the exit of the compressor is reversed by 180° in the head portion of the gas turbine combustor and guided to the gas turbine combustor.

Japanese Patent Laid-open No. 2009-192175 (Patent Literature 2) discloses a technique for providing a flow control means at the entrance of the flow path reversing portion of the gas turbine combustor so that the flow control means sets the flow rate higher on the inner circumferential side of the flow path reversing portion than on its outer circumferential side. Patent Literature 2 further discloses a technique for generating turbulence in the stream using the flow control means to suppress a flow deviation in the flow path reversing portion.

JP 2012 154587 A relates to a flow-straightening plate which is provided to block a compressed air channel formed between the inner circumferential surface of an outer-diameter-side passage wall and the outer circumferential surface of an inner-diameter-side passage wall that has a number of holes communicatively connecting the upstream side of the compressed air channel to the downstream side of the same across the flow-straightening plate.

### {Summary of Invention}

### {Technical Problem}

In the reverse-flow gas turbine combustor, a method for increasing the flow path cross-sectional area to lower the flow velocity or a method for mounting a resistor such as a baffle plate in the flow path or providing a guide plate that divides and guides a stream has conventionally been used to reduce the pressure loss and the airflow deviation occurring in the flow path reversing portion. In the method for increasing the flow path cross-sectional area to lower the flow velocity during reversal, the flow path requires widening from the upstream side of the flow path reversing portion, resulting in a larger gas turbine combustor structure.

In the technique described in Patent Literature 1, providing a baffle plate or a guide plate keeps the flow path cross-sectional area small, but it leads to a complex flow path. Especially, a structure inserted midway in the flow path needs to be supported in consideration of thermal deformation because of the difference in temperature of the flow path between OFF and ON of the gas turbine operation. Therefore, the supporting method is complex, and the structure insertion increases the pressure loss.

The technique described in Patent Literature 2 proposes a method for setting the flow rate high on the inner circumferential side using a flow control means, and a method for generating turbulence in the entire flow path to suppress flow separation in the reversing portion. However, since these methods require flow control or applying resistance to a stream when turbulence is generated in the stream, the use of the flow control means increases the pressure loss.

It is an object of the present invention to provide a gas turbine combustor in which the pressure loss and the flow deviation in the flow path reversing portion of the gas turbine combustor are reduced to uniformly mix a fuel with air to reduce NOx.

### {Solution to Problem}

These and other objects are achieved by a gas turbine combustor according to the appended claim 1 and by a gas turbine combustor according to the appended claim 3. Further detailed characteristics and advantages are described in the dependent claims.

### {Advantageous Effects of Invention}

In the gas turbine combustor according to the embodiment of the present invention, providing an obstacle having the aforementioned feature in the airflow path on the upstream side of the flow path reversing portion produces the following effects. First, the flow velocity of air lowers after its passage through the holes (opening portions) in the obstacle on the inner circumferential side of the airflow path because the flow path widens after the passage through the holes. Much turbulence occurs because of the difference in flow velocity from the ambient gas. Because of the low flow velocity and much turbulence, the stream easily bends and thus flows on the outer circumferential side of the combustor interior through the inner circumference of the reversing portion.

Air after passage through the holes (opening portions) in the obstacle on the outer circumferential side of the airflow path has an opening portion cross-sectional area larger than that on the inner circumferential side and a shielded cross-sectional area smaller than that on the inner circumferential side. Therefore, since the flow path widens only a little after passage through the holes (opening portions), the flow velocity lowers only a little.

Turbulence on the outer circumferential side is less than that on the inner circumferential side because of the small contact area with the ambient gas. Since the flow velocity is higher and less turbulence occurs than on the inner circumferential side, it is easy to allow rectilinear propagation by the inertial force. Therefore, the air circulates around the outer circumference of the reversing portion and flows on the central side of the combustor interior.

In this manner, providing an obstacle of the present invention in the airflow path on the upstream side of the flow path reversing portion forms a stream flowing on the inner circumferential side of the combustor interior through the inner circumference, and a stream flowing on the central side of the combustor interior through the outer circumference, both in the reversing portion, so that an airstream uniformly flows through the reversing portion and the combustor.

Since only an obstacle may be provided upstream of the reversing portion, the gas turbine combustor has a simple structure. Locating the obstacle upstream of the reversing portion slightly increases the pressure loss in an obstacle portion on the upstream side of the flow path reversing portion, but it can suppress the occurrence of a flow deviation in the flow path reversing portion, thus reducing the air pressure loss over the entire gas turbine combustor.

Air uniformly flows through the gas turbine combustor so that a fuel and air can be easily, uniformly mixed to improve the combustion performance, including a reduction in NOx.

According to the present invention, it is possible to attain a gas turbine combustor in which the pressure loss and the flow deviation in the flow path reversing portion of the gas turbine combustor are reduced to uniformly mix a fuel with air to reduce NOx.

### {Brief Description of Drawings}

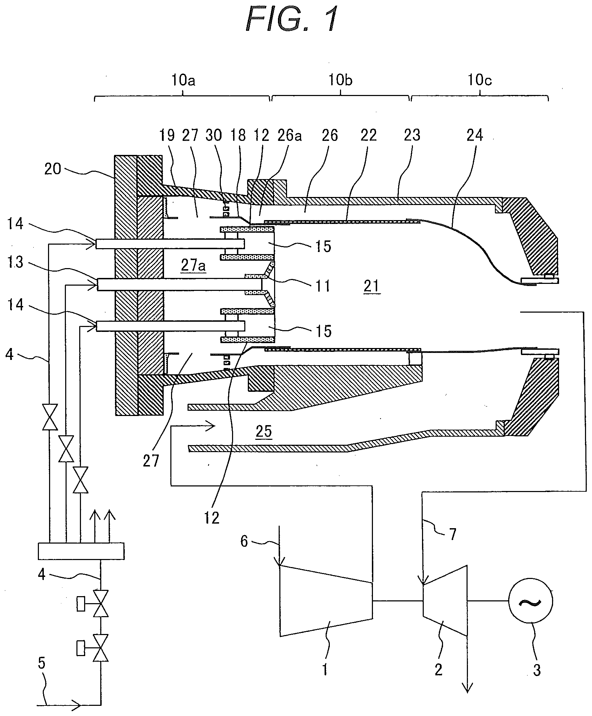

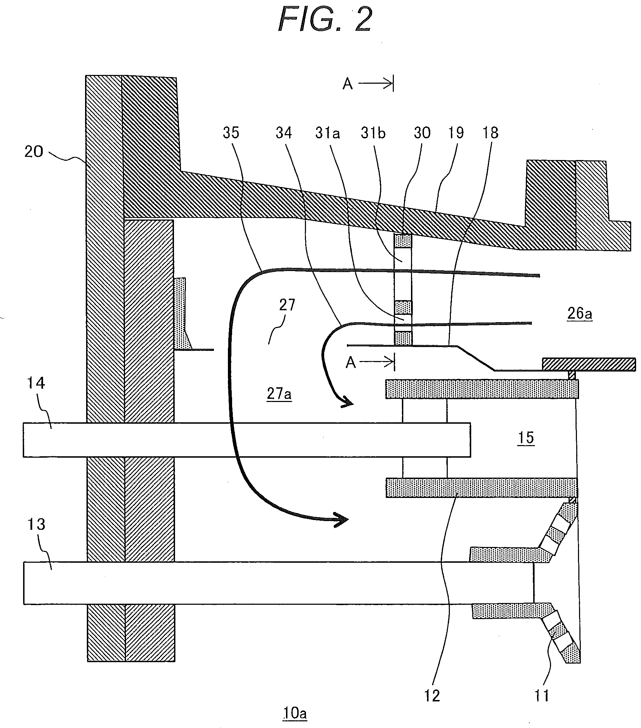

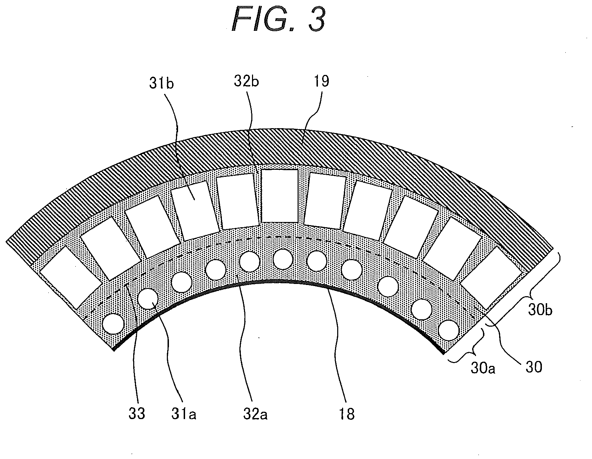

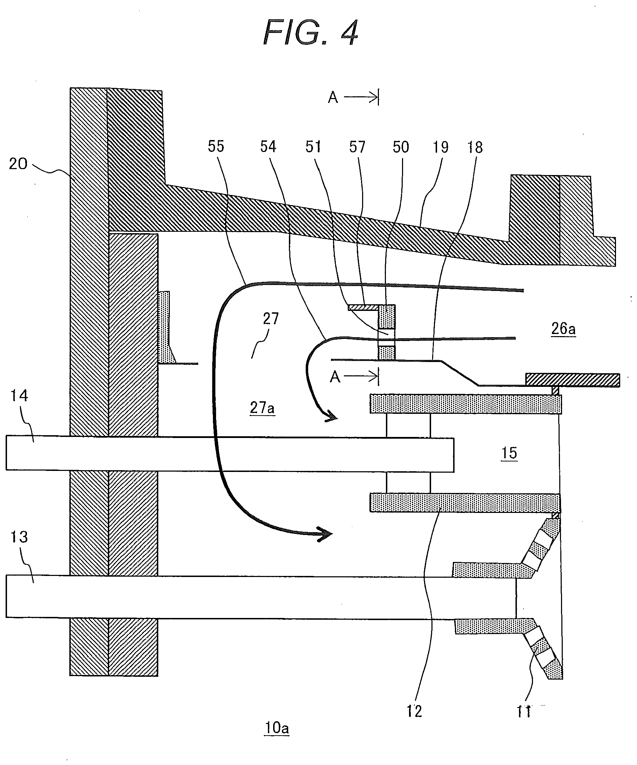

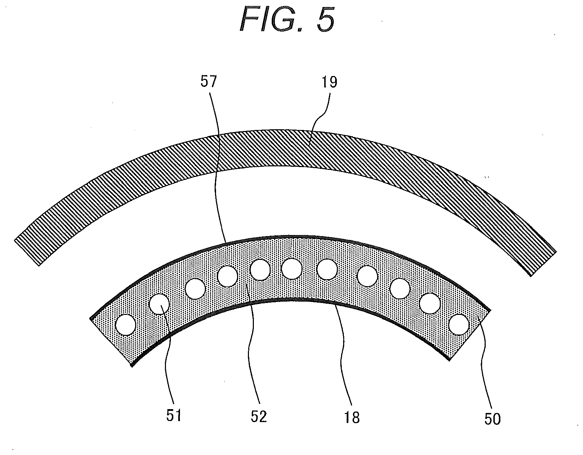

{Fig. 1} FIG. 1 is a schematic view showing the cross-section of a gas turbine combustor according to a first embodiment of the present invention.
{Fig. 2} FIG. 2 is a partial enlarged view showing the vicinity of a flow path reversing portion in the gas turbine combustor according to the first embodiment of the present invention shown in FIG. 1.
{Fig. 3} FIG. 3 is a view taken in the direction of arrows and showing a part of a flow path located upstream of the flow path reversing portion in the gas turbine combustor according to the first embodiment of the present invention shown in FIG. 2.
{Fig. 4} FIG. 4 is a partial enlarged view showing the vicinity of a flow path reversing portion in a gas turbine combustor according to a second embodiment of the present invention.
{Fig. 5} FIG. 5 is a view taken in the direction of arrows and showing a part of a flow path located upstream of the flow path reversing portion in the gas turbine combustor according to the second embodiment of the present invention shown in FIG. 4.

### {Description of Embodiments}

A gas turbine combustor according to an embodiment of the present invention will be described hereinafter with reference to the drawings.

### {First Embodiment}

A gas turbine combustor according to a first embodiment of the present invention will be described below with reference to FIGS. 1 through 6.

FIG. 1 shows a sectional view of a gas turbine combustor 10 according to the first embodiment of the present invention.

FIG. 2 is a partial enlarged sectional view showing a part of an airflow path in the gas turbine combustor 10 according to the first embodiment of the present invention shown in FIG. 1.

FIG. 3 is a view taken in the direction of arrows A - A in FIG. 2 and showing the shape of an obstacle provided in the airflow path in the gas turbine combustor according to the first embodiment of the present invention.

A gas turbine generator including the gas turbine combustor 10 according to the first embodiment of the present invention shown in FIG. 1 includes a compressor 1 which takes in combustion air 6 and compresses it, the gas turbine combustor 10 which mixes the air 6 compressed by the compressor 1 with a fuel 5 externally supplied through a fuel supply system 4 and burns the fuel 5 to generate a high-temperature, high-pressure combustion gas 7, a turbine 2 which is driven by introducing the combustion gas generated by the gas turbine combustor 10, a generator 3 which is driven by the turbine 2 and rotates to generate power, and a controller (not shown).

In the gas turbine generator including the gas turbine combustor 10 according to the first embodiment of the present invention shown in FIG. 1, the fuel 5 is externally supplied to the gas turbine combustor 10 through the fuel supply system 4.

The air 6 is pressurized and compressed by the compressor 1 and supplied to the gas turbine combustor 10 as combustion air 6 for burning the fuel 5.

The gas turbine combustor 10 mixes the fuel 5 with the air 6 and burns the fuel 5 to generate a high-temperature, high-pressure combustion gas 7. The generated high-temperature, high-pressure combustion gas 7 is introduced from the gas turbine combustor 10 into the turbine 2 to drive the turbine 2, which recovers the energy held by the combustion gas 7.

Part of the energy held by the combustion gas 7 serves as a power source for the compressor 1 driven by the turbine 2, while the remaining part of the energy held by the combustion gas 7 rotates the generator 3 driven by the turbine 2 and is used to generate power.

The gas turbine generator including the gas turbine combustor 10 according to the first embodiment of the present invention shown in FIG. 1 exemplifies a single-shaft gas turbine generator in which the compressor 1 is connected to the turbine 2 and the generator 3 via a single shaft. However, the gas turbine combustor 10 according to the embodiment of the present invention is also applicable to a two-shaft gas turbine generator in which the turbine 2 is divided into high- and low-pressure turbines.

The gas turbine combustor 10 according to the embodiment of the present invention is also applicable to a gas turbine generator when it is used as a power source other than the generator 3.

In the gas turbine generator including the gas turbine combustor 10 according to the first embodiment of the present invention shown in FIG. 1, not only a gas fuel but also a liquid fuel can be used as the fuel 5, depending on the arrangement of, for example, pipes or valves in the fuel supply system 4 that supplies the fuel 5 to the gas turbine combustor 10.

In the gas turbine generator including the gas turbine combustor 10 according to the first embodiment of the present invention shown in FIG. 1, although only one fuel supply system 4 is provided, a plurality of fuel supply systems 4 may be provided so that the gas turbine combustor 10 uses a plurality of fuel species.

The gas turbine combustor 10 according to the first embodiment of the present invention is also called a reverse-flow combustion chamber in accordance with how air flows. A specific configuration of the gas turbine combustor 10 according to the first embodiment will be described below.

In the gas turbine combustor 10 according to the first embodiment of the present invention shown in FIG. 1, parts constituting the gas turbine combustor 10 are divided into a combustor head portion 10a, a combustion chamber portion 10b, and a combustor tail portion 10c from the left of FIG. 1.

In the gas turbine combustor 10 according to the first embodiment of the present invention shown in FIG. 1, a pilot burner 11 is disposed at the center portion of axis of the combustor head portion 10a constituting the gas turbine combustor 10 according to this embodiment, and a plurality of main burners 12 are arranged around the outer circumference of the pilot burner 11.

A pilot nozzle 13 including holes for injecting the fuel 5 into a combustion chamber 21 is located at the end of the pilot burner 11 on its central axis.

The main burners 12 accommodate main nozzles 14 including holes for injecting the fuel 5. In the gas turbine combustor 10 according to the first embodiment of the present invention, the ends of the main nozzles 14 are arranged within the main burners 12, and premixing nozzles 15 that mix the fuel 5 and the air 6 are accommodated within the ends of the main burners 12.

An inner casing 18 is provided around the outer circumference of the pilot burner 11 and the main burners 12 to surround the pilot burner 11 and the main burners 12.

An outer casing 19 is provided on the outer circumferential side of the inner casing 18 to surround the outer circumference of the inner casing 18, an end cover 20 is further provided at the end portion of the outer casing 19, and the outer casing 19 and the end cover 20 constitute a sealed pressure vessel.

An airflow path 26a that guides air is formed between the outer circumference of the inner casing 18 and the inner circumference of the outer casing 19 in communication with an airflow path 26 that guides air as well (to be described later).

The combustion chamber portion 10b constituting the gas turbine combustor 10 according to this embodiment includes a combustion chamber 21 which is provided in its central portion, and in which the fuel 5 and the air 6 supplied from the pilot burner 11 and the main burners 12 are mixed and the fuel 5 is burnt to generate a high-temperature, high-pressure combustion gas 7. A liner 22 is disposed on the outer circumference of the combustion chamber 21 to partition the combustion chamber 21.

A partition 23 is disposed on the outer circumferential side of the liner 22, and an airflow path 26 that communicates with the airflow path 26a and guides the air 6 is formed between the outer circumference of the liner 22 and the inner circumference of the partition 23.

In the combustor tail portion 10c constituting the gas turbine combustor 10 according to this embodiment, the high-temperature, high-pressure combustion gas 7 generated in the combustion chamber 21 flows down in the central space partitioned by a partition 24 and is supplied to the turbine 2 located downstream of the gas turbine combustor 10.

The outer circumference of the partition 24 faces the airflow path 26, through which the air 6 supplied from the exit of the compressor 1 into the gas turbine combustor 10 through an airflow path 25 flows.

The air 6 flowing into the gas turbine combustor 10 sequentially flows through the airflow path 26 on the outer circumferential side of the gas turbine combustor 10 and the airflow path 26a communicating with the airflow path 26, from the combustor tail portion 10c to the combustor head portion 10a of the gas turbine combustor 10 through the airflow path 25 from the exit of the compressor 1.

The air 6 flowing through the airflow path 26a flows into an inner casing internal space 27a through an opening portion 27 formed in the wall surface of the inner casing 18, in the combustor head portion 10a of the gas turbine combustor 10.

Before flowing into the opening portion 27, the air 6 sequentially flows through the airflow paths 26 and 26a from the combustor tail portion 10c to the combustor head portion 10a. However, after flowing from the opening portion 27 into the inner casing internal space 27a, the air 6 flows from the combustor head portion 10a to the combustion chamber portion 10b and the combustor tail portion 10c. In this manner, the opening portion 27 serves as a flow path reversing portion.

The air 6 that sequentially flows through the airflow paths 26 and 26a may be configured to partially flow into the combustion chamber 21 midway in the airflow path 26 through air holes formed in the liner 22 and the partition 24 (not shown), instead of flowing up to the combustor head portion 10a.

The air 6 flowing from the opening portion 27 in the inner casing 18 of the gas turbine combustor 10 into the inner casing internal space 27a flows into the combustion chamber 21 forming the combustion chamber portion 10b connected to the downstream portion of the inner casing internal space 27a through the pilot burner 11 and the main burners 12.

In the combustion chamber 21, the fuel 5 and the air 6 supplied from the pilot nozzle 13 and the main nozzles 14 are mixed and the fuel 5 is burnt to generate a high-temperature, high-pressure combustion gas 7.

The high-temperature, high-pressure combustion gas 7 generated in the combustion chamber 21 flows down on the inner circumferential side of the partition 24 forming the combustor tail portion 10c and flows into the turbine 2 located downstream of the combustor tail portion 10c.

In the gas turbine combustor 10, it is important to reduce unburnt matter and nitrogen oxide (NOx) and carbon monoxide (CO) in the combustion gas 7. Further, it is desired to reduce the pressure loss of the air 6 between the front and rear of the combustor, which influences the gas turbine efficiency.

Mixture of the fuel 5 and the air 6 is important in reducing unburnt matter, NOx and CO in the combustion gas 7 during fuel burning in the combustion chamber 21. In the diffusion combustion method in which a fuel is burnt while separately supplying and mixing the fuel and air, flames can be easily, stably formed, but NOx can be easily generated due to the formation of locally high temperature portions in the flames.

In the premixed combustion method in which a fuel is burnt after premixing the fuel and air, NOx can be reduced because the temperatures in the flames become uniform when the fuel is burnt under a dilute condition, but stable combustion takes place only in a narrow range. Therefore, the diffusion combustion and premixed combustion methods are generally used in combination.

In the gas turbine combustor 10 according to the first embodiment of the present invention, the pilot burner 11 provided at the combustor central portion performs diffusion combustion. The main burners 12 provided on the outer circumference of the pilot burner 11 perform premixed combustion.

A flame formed by diffusion combustion by the pilot burner 11 is used to hold flames of the main burners 12 to achieve stable combustion, thus suppressing generation of CO and unburnt matter. Further, the amount of fuel charged into the main burners 12 is increased to enhance the ratio of premixed combustion to suppress generation of NOx.

In the above-mentioned combustion scheme, it is important to appropriately distribute not only the fuel 5 but also the air 6 to the pilot burner 11 and the main burners 12.

However, the flow of the air 6 is prone to a deviation (flow deviation) when the flow direction of the air 6 reverses in the combustor head portion 10a, and this may degrade the combustion performance or raise the pressure loss.

In the gas turbine combustor 10 according to the first embodiment of the present invention, the pressure loss is reduced by suppressing the deviation of the flow of the air 6 from the opening portion 27 into the inner casing internal space 27a.

The gas turbine combustor 10 according to the first embodiment will be described in detail below with reference to partial enlarged views of the vicinity of the combustor head portion 10a in the gas turbine combustor 10 according to the first embodiment of the present invention shown in FIGS. 2 and 3. FIG. 2 is a partial enlarged view illustrating a structure including an obstacle 30 located in the airflow path 26a of the gas turbine combustor 10, and FIG. 3 is an enlarged view illustrating the obstacle 30 when the combustor head portion 10a of the gas turbine combustor 10 is viewed from the side of the arrows A in FIG. 2.

Referring to FIG. 2, in the gas turbine combustor 10 according to the first embodiment of the present invention, the air 6 flowing down the airflow path 26a formed between the outer casing 19 and the inner casing 18 of the combustor head portion 10a flows into the inner casing internal space 27a through the opening portion 27 formed in the wall surface of the inner casing 18, but an obstacle 30 that impedes the air 6 flowing through the airflow path 26a is placed in the airflow path 26a communicating with the upstream side of the opening portion 27.

The obstacle 30 is formed by a perforated plate including multiple holes formed in an inner circumferential portion 30a of the obstacle 30 allowing communication between the upstream and downstream sides, and multiple holes formed in an outer circumferential portion 30b of the obstacle 30. The end portion of the inner circumferential portion 30a of the obstacle 30 is connected to the outer circumferential wall surface of the inner casing 18 to position the obstacle 30 upstream of the opening portion 27 formed in the wall surface of the inner casing 18 with respect to the flow of the air 6. However, a gap is formed between the inner circumferential wall surface of the outer casing 19 and the end portion of the outer circumferential portion 30b of the obstacle 30 lest the outer circumferential portion 30b of the obstacle 30 be connected.

The air 6 flowing through the airflow path 26a flows from the opening portion 27 formed in the inner casing 18 into the inner casing internal space 27a through inner circumferential opening portions 31a and outer circumferential opening portions 31b formed as holes in the inner circumferential portion 30a and the outer circumferential portion 30b, respectively, of the perforated plate used as the obstacle 30 provided in the airflow path 26a.

The obstacle 30 provided in the airflow path 26a communicating with the opening portion 27 of the gas turbine combustor 10 according to the first embodiment of the present invention has the inner circumferential opening portions 31a as the cross-sectional area of the hole portions formed in the inner circumferential portion 30a that passes the air 6, and the outer circumferential opening portions 31b as the cross-sectional area of the hole portions formed in the outer circumferential portion 30b, as shown in FIGS. 2 and 3.

For a portion that impedes the flow of the air 6 indicated by a hatched portion in FIG. 3 in the obstacle 30, a portion excluding the inner circumferential opening portions 31a in the inner circumferential portion 30a of the obstacle 30 serves as an inner circumferential shielding portion 32a, and a portion excluding the outer circumferential opening portions 31b in the outer circumferential portion 30b of the obstacle 30 serves as an outer circumferential shielding portion 32b. A dotted line shown in FIG. 3 indicates a line 33 for dividing the inner circumferential portion 30a and the outer circumferential portion 30b of the obstacle 30.

The ratio of the cross-sectional area of the inner circumferential opening portions 31a and the outer circumferential opening portions 31b formed as holes in the inner circumferential portion 30a and the outer circumferential portion 30b, respectively, of the obstacle 30 to the sum of the cross-sectional areas of the inner circumferential shielding portion 32a and the outer circumferential shielding portion 32b of the obstacle 30, and the inner circumferential opening portions 31a and the outer circumferential opening portions 31b is defined as an opening ratio.

The obstacle 30 is divided into the inner circumferential opening portions 31a and the inner circumferential shielding portion 32a formed in the inner circumferential portion 30a of the obstacle 30, and the outer circumferential opening portions 31b and the outer circumferential shielding portion 32b formed in the outer circumferential portion 30b of the obstacle 30, as indicated by the dotted dividing line 33 in FIG. 3.

In the gas turbine combustor 10 according to the first embodiment of the present invention, the obstacle 30 provided in the airflow path 26a communicating with the opening portion 27 has a low opening ratio in the inner circumferential portion 30a and a high opening ratio in the outer circumferential portion 30b.

In other words, in the obstacle 30, the inner circumferential opening portions 31a formed in the inner circumferential portion 30a are small, while the outer circumferential opening portions 31b formed in the outer circumferential portion 30b are large.

In the gas turbine combustor 10 according to the first embodiment of the present invention, the flow deviations of airstreams 34 and 35 are suppressed by a configuration including inner circumferential opening portions 31a having a low opening ratio and formed in the inner circumferential portion 30a of the obstacle 30 provided in the airflow path 26a communicating with the opening portion 27, and outer circumferential opening portions 31b having a high opening ratio and formed in the outer circumferential portion 30b of the obstacle 30.

More specifically, in the gas turbine combustor 10 according to the first embodiment of the present invention shown in FIG. 2, the flow of the airstream 34 on the inner circumferential side of the airflow path 26a is slowed down by changing the configuration of the inner circumferential opening portions 31a and the outer circumferential opening portions 31b provided in the inner circumferential portion 30a and the outer circumferential portion 30b, respectively, of the obstacle 30 located in the airflow path 26a communicating with the opening portion 27.

The flow of the airstream 35 on the outer circumferential side of the airflow path 26a communicating with the inner casing internal space 27a is speeded up. In other words, the airflow path 26a is provided with an obstacle 30 having the aforementioned configuration including inner circumferential opening portions 31a having a low opening ratio and formed in the inner circumferential portion 30a of the obstacle 30, and outer circumferential opening portions 31b having a high opening ratio and formed in the outer circumferential portion 30b of the obstacle 30.

The use of the above-mentioned configuration for the obstacle 30 generates a difference in flow velocity between the airstream 34 flowing on the inner circumferential side of the airflow path 26a through the inner circumferential opening portions 31a formed in the inner circumferential portion 30a of the obstacle 30 on the downstream side of the obstacle 30, and the airstream 35 flowing on the outer circumferential side of the airflow path 26a through the outer circumferential opening portions 31b formed in the outer circumferential portion 30b of the obstacle 30 to form a substantially uniform stream using the airstream 34 passing through the inner circumferential opening portions 31a provided in the inner circumferential portion 30a of the obstacle 30 and the airstream 35 passing through the outer circumferential opening portions 31b provided in the outer circumferential portion 30b of the obstacle 30 to guide the air flowing down the airflow path 26a from the opening portion 27 provided in the inner casing 18 into the inner casing internal space 27a formed in the inner casing 18.

The structure of the obstacle 30, and the airstreams 34 and 35 in the downstream portion of the obstacle 30 will be described below.

In the gas turbine combustor 10 according to the first embodiment of the present invention shown in FIG. 2, the inner circumferential portion 30a of the obstacle 30 located in the airflow path 26a communicating with the opening portion 27 is formed such that the opening ratio of the obstacle 30 on the inner circumferential side 30a, that is, the ratio of the cross-sectional area of the inner circumferential opening portions 31a provided in the inner circumferential portion 30a of the obstacle 30 to the cross-sectional area of the inner circumferential opening portions 31a and the inner circumferential shielding portion 32a is low.

In the airflow path 26a on the downstream side of the obstacle 30, the airstream 34 passing through the inner circumferential opening portions 31a provided in the inner circumferential portion 30a of the obstacle 30 causes turbulence due to the difference in flow velocity from a stagnation portion of the stream on the downstream side of the shielding portion 32a, and the airstream 34 spreads to the stagnation portion, thus slowing down the flow of the airstream 34.

Since the opening ratio of the obstacle 30 is low in the inner circumferential portion 30a, the flow velocity of the airstream 34 on the downstream side of the inner circumferential portion 30a of the obstacle 30 lowers more significantly than that of the airstream 35 on the downstream side of the outer circumferential portion 30b of the obstacle 30.

Again, since the opening ratio of the obstacle 30 is low in the inner circumferential portion 30a, the flow rate of the airstream 34 is also low on the downstream side of the inner circumferential portion 30a of the obstacle 30. Therefore, the inertial force of the airstream 34 is weak on the downstream side of the inner circumferential portion 30a of the obstacle 30.

Since the inertial force of the airstream 34 is weak, the flow direction of the airstream 34 is more likely to vary. When the airstream 34 flows from the airflow path 26a into the inner casing internal space 27a through the obstacle 30, the airstream 34 reverses at a position close to the end of the inner casing 18 and flows to the main burners 12 on the outer circumferential side of the inner casing 18 in the inner casing 18.

The opening ratio representing the ratio of the cross-sectional area of the outer circumferential opening portions 31b provided in the outer circumferential portion 30b of the obstacle 30 to the sum of the cross-sectional areas of the outer circumferential opening portions 31b and the cross-sectional area of the outer circumferential shielding portion 32b is high in the outer circumferential portion 30b of the obstacle 30.

The airstream 35 passing through the outer circumferential opening portions 31b causes less turbulence on the downstream side of the outer circumferential portion 30b of the obstacle 30 than on the inner circumferential side due to the difference in flow velocity from a stagnation portion of the stream on the downstream side of the outer circumferential shielding portion 32b.

Since the cross-sectional area of the outer circumferential shielding portion 32b is small, the flow velocity of the airstream 35 flowing through the outer circumferential portion 30b of the obstacle 30 lowers less than that of the airstream 34 flowing through the inner circumferential portion 30a of the obstacle 30.

Because of the high opening ratio, the flow rate of the airstream 35 flowing through the outer circumferential portion 30b of the obstacle 30 is also high. Since the inertial force is higher in the outer circumferential portion 30b of the obstacle 30 than in the inner circumferential portion 30a of the obstacle 30, the flow direction of the airstream 35 flowing through the outer circumferential portion 30b of the obstacle 30 is less likely to vary. When the airstream enters the inner casing internal space 27a from the airflow path 26a through the obstacle 30, the airstream 35 reverses in its airflow direction at a position close to the head portion 10a of the gas turbine combustor 10 and flows to the pilot burner 11 on the central axis in the inner casing internal space 27a.

In this manner, in the gas turbine combustor 10 according to the first embodiment of the present invention, an obstacle 30 is provided in the airflow path 26a communicating with the opening portion 27 such that the opening ratio is lower in the inner circumferential portion 30a of the obstacle 30 than in the outer circumferential portion 30b. This makes it possible to form a substantially uniform stream in which the airstreams 34 and 35 respectively reverse from a position away from the end cover 20 of the head portion 10a of the gas turbine combustor 10 in the opening portion 27, where the airstream reverses, to a position close to the end cover 20.

As a result, since a substantially uniform stream is formed without collecting the airstreams 34 and 35 in one region in the inner casing internal space 27a, the pressure loss can be reduced.

Air is evenly distributed to the pilot burner 11 and the main burners 12 by uniformly guiding the airstreams 34 and 35 into the inner casing 18 of the gas turbine combustor 10 on the downstream side of the inner casing internal space 27a.

As a result, a fuel and air can be easily, uniformly mixed in the pilot burner 11 and the main burners 12, thus achieving reductions in both NOx and pressure loss.

In the gas turbine combustor 10 according to the first embodiment of the present invention, the obstacle 30 provided in the airflow path 26a communicating with the opening portion 27 has an opening ratio lower in the inner circumferential portion 30a than in the outer circumferential portion 30b.

In the gas turbine combustor 10 according to the first embodiment of the present invention shown in FIG. 3, the inner circumferential opening portions 31a and the outer circumferential opening portions 31b provided in the inner circumferential portion 30a and the outer circumferential portion 30b, respectively, of the obstacle 30 provided in the airflow path 26a communicating with the opening portion 27 form circles and rectangles, respectively, as holes formed in a perforated plate serving as the obstacle 30. However, the shapes of the inner circumferential opening portions 31a and the outer circumferential opening portions 31b provided in the inner circumferential portion 30a and the outer circumferential portion 30b, respectively, of the obstacle 30 formed by a perforated plate are not limited to circles and rectangles, respectively, and the opening portions 31a and 31b may form ellipses or polygons.

In the gas turbine combustor 10 according to the first embodiment of the present invention, when the holes of the inner circumferential opening portions 31a in the inner circumferential portion 30a of the obstacle 30 provided in the airflow path 26a communicating with the opening portion 27 form a shape that provides peripheral surfaces larger than those of circular holes, such as a star shape, turbulence of the airstream 34 after passage through the inner circumferential opening portions 31a strengthens, thus further decelerating the flow of the airstream 34.

As described above, according to the embodiment of the present invention, it is possible to attain a gas turbine combustor in which the pressure loss and the flow deviation in the flow path reversing portion of the gas turbine combustor are reduced to uniformly mix a fuel with air to reduce NOx.

### {Second Embodiment}

A gas turbine combustor 10 according to a second embodiment of the present invention will be descried below with reference to FIGS. 4 and 5.

FIG. 4 is an enlarged sectional view showing a part of an airflow path 26 in the gas turbine combustor 10 according to the second embodiment of the present invention.

FIG. 5 is a view taken in the direction of arrows A - A in FIG. 4 and showing the shape of an obstacle 50 provided in an airflow path 26a in the gas turbine combustor 10 according to the second embodiment of the present invention.

The basic configuration of the gas turbine combustor 10 according to the second embodiment of the present invention shown in FIGS. 4 and 5 is substantially the same as the gas turbine combustor 10 according to the first embodiment, and a description thereof will be omitted.

The gas turbine combustor 10 according to the second embodiment of the present invention is different from the gas turbine combustor 10 according to the first embodiment in terms of the shape of the obstacle 50 provided in the airflow path 26 between an outer casing 19 and an inner casing 18 of a head portion 10a of the gas turbine combustor 10.

In the gas turbine combustor 10 according to the second embodiment of the present invention shown in FIGS. 4 and 5, its head portion 10a is provided with an obstacle 50 placed in the airflow path 26a communicating with an opening portion 27.

The obstacle 50 is formed by a perforated plate including inner circumferential opening portions 51 formed as multiple holes allowing communication between the upstream and downstream sides, and the obstacle 50 is located on the outer circumferential surface of the inner casing 18 on the upstream side of the opening portion 27 provided in the wall surface of the inner casing 18 with respect to the flow of air 6.

Air flowing through the airflow path 26a flows down the inner circumferential opening portions 51 formed as multiple holes formed in the obstacle 50 constituting the perforated plate, and flows into an inner casing internal space 27a formed in the inner casing 18 through the opening portion 27 provided in the wall surface of the inner casing 18.

The obstacle 50 provided in the airflow path 26a is located only on the inner circumferential side of the airflow path 26a.

In the gas turbine combustor 10 according to the second embodiment of the present invention, part of air flowing through the airflow path 26a communicating with the opening portion 27 passes through the inner peripheral opening portions 51 provided in the perforated plate constituting the obstacle 50, while the remaining part of the air flows through a void portion in the airflow path 26a, excluding the obstacle, on the outer circumferential side of the obstacle 50.

A guide plate 57 that extends downstream parallel to the airflow direction may be provided at the end of the obstacle 50, as shown in FIGS. 4 and 5.

In the gas turbine combustor 10 according to the second embodiment of the present invention, holes that pass air in the obstacle 50 provided in the airflow path 26a communicating with the opening portion 27 are used as the inner circumferential opening portions 51, and a portion of the obstacle 50 that impedes the flow of air, excluding the inner circumferential opening portions 51 formed as holes which pass air on the inner circumferential side of the airflow path 26a, is used as an inner circumferential shielding portion 52.

In the gas turbine combustor 10 according to the second embodiment of the present invention, the ratio of the cross-sectional area of the inner circumferential opening portions 51 to the sum of the cross-sectional areas of the inner circumferential opening portions 51 and the cross-sectional areas of the inner circumferential shielding portion 52 in the obstacle 50 is defined as an opening ratio.

In the gas turbine combustor 10 according to the second embodiment of the present invention shown in FIGS. 4 and 5, the obstacle 50 provided in the airflow path 26a communicating with the opening portion 27 is located only on the inner circumferential side of the airflow path 26a.

In the gas turbine combustor 10 according to the second embodiment of the present invention, the opening ratio of the obstacle 50 provided in the airflow path 26a communicating with the opening portion 27 is lower than 1 in a flow path portion including the obstacle 50 and is 1 in a flow path portion on the outer circumferential side of the obstacle 50, excluding the obstacle 50.

In the gas turbine combustor 10 according to the second embodiment of the present invention, the obstacle 50 provided in the airflow path 26a communicating with the opening portion 27 is located only on the outer surface of the inner casing 18 and is, therefore, free from the influence of the difference in thermal expansion between the inner casing 18 and the outer casing 19.

The structure of the obstacle 50 provided in the airflow path 26a communicating with the opening portion 27 in the gas turbine combustor 10 according to the second embodiment of the present invention, and the flow of air in the downstream portion of a structure forming the obstacle 50 will be described below.

In the gas turbine combustor 10 according to the second embodiment of the present invention shown in FIG. 4, the obstacle 50 provided in the airflow path 26a communicating with the opening portion 27 has a low opening ratio representing the ratio of the cross-sectional area of the inner circumferential opening portions 51 to the sum of the cross-sectional areas of the inner circumferential opening portions 51 and the cross-sectional area of the inner circumferential shielding portion 52.

An airstream 54 passing through the inner circumferential opening portions 51 causes turbulence on the downstream side of the obstacle 50 due to the difference in flow velocity from a stagnation portion of the stream on the downstream side of the inner circumferential shielding portion 52 of the obstacle 50, and the stream spreads to the stagnation portion, thus slowing down the flow of the airstream 54.

Since the opening ratio is low on the inner circumferential side of the obstacle 50, the flow velocity lowers more significantly in the downstream portion of the obstacle 50 on the inner circumferential side than in the downstream portion of the obstacle 50 on the outer circumferential side of the obstacle 50. Again, since the opening ratio of the obstacle 50 is low, the flow rate is also low.

The inertial force of air is weak in the downstream portion of the obstacle 50 on the inner circumferential side. Since the flow direction is more likely to vary because of the weak inertial force, the direction of the airstream 54 reverses at a position close to the end of the inner casing 18 in entering the opening portion 27.

In other words, the airstream 54 passing through the opening portions 51 flows to main burners 12 on the outer circumferential side through a position close to the end of the inner casing 18.

The opening ratio is as high as 1 on the outer circumferential side of the obstacle 50 because of the absence of an obstacle. Therefore, an airstream 55 passing on the outer circumferential side of the obstacle 50 causes less turbulence than the airstream 54 on the inner circumferential side and even decelerates less than the airstream 54 on the inner circumferential side.

Since the inertial force is higher on the outer circumferential side of the obstacle 50 than on the inner circumferential side of the obstacle 50, the airflow direction is less likely to vary in the former, and the airstream 55 reverses in its airflow direction at a position close to the combustor head portion in entering the opening portion 27 and flows to the pilot burner 11 on the central axis in the inner casing 18.

In this manner, in the gas turbine combustor 10 according to the second embodiment of the present invention, the obstacle 50 provided in the airflow path 26a communicating with the opening portion 27 is located only on the inner circumferential side to set the opening ratio lower on the inner circumferential side of the obstacle 50 than on the outer circumferential side of the obstacle 50, so that a stream that reverses in its airflow direction from a position away from the head portion of the gas turbine combustor 10 to a position close to this head portion can be formed in the opening portion 27 where the airstreams 54 and 55 reverse in their airflow directions.

As a result, since a uniform stream is formed without collecting the airstreams 54 and 55 in one region in the opening portion 27, the pressure loss can be reduced.

The airstreams 54 and 55 are evenly distributed to the pilot burner 11 and the main burners 12 by uniformly guiding the airstreams 54 and 55 into the inner casing internal space 27a in the inner casing 18 of the gas turbine combustor 10 on the downstream side of the opening portion 27.

As a result, a fuel and air can be easily, uniformly mixed in the pilot burner 11 and the main burners 12, thus achieving both a reduction in NOx and a reduction in pressure loss or combustor structure simplification.

In the gas turbine combustor 10 according to the second embodiment of the present invention, a guide plate 57 that extends parallel to the longitudinal direction of the airflow path 26a is provided at an end defining the outer circumferential end face of the obstacle 50 provided in the airflow path 26a communicating with the opening portion 27 of the gas turbine combustor 10, as shown in FIG. 4.

Providing the guide plate 57 at an end defining the outer circumferential end face of the obstacle 50 allows separation between the airstream 54 flowing on the inner circumferential side of the airflow path 26a communicating with the inner casing internal space 27a and the airstream 55 flowing on the outer circumferential side of the airflow path 26a.

The guide plate 57 provided at an end defining the outer circumferential end face of the obstacle 50 provided in the airflow path 26a is used to separate the airstream 54 flowing on the inner circumferential side of the airflow path 26a and the airstream 55 flowing on the outer circumferential side of the airflow path 26a, so that the airstreams 54 and 55 flowing from the airflow path 26a into the opening portion 27 through the obstacle 50 can form a uniform stream without collection in one region, thus further reducing the pressure loss.

Since the guide plate 57 provided at an end defining the outer circumferential end face of the obstacle 50 is located on the obstacle 50 parallel to the airflow direction, the presence of the guide plate 57 contributes little to the pressure loss.

Gas turbine combustors 10 having the same structure are used as a gas turbine combustor 10 according to the second embodiment provided with an obstacle 50 located in the airflow path 26a, and a gas turbine combustor according to a Comparative Example excluding the obstacle 50, and a reduction in pressure loss due to the presence of the obstacle 50 provided in the airflow path 26a of the gas turbine combustor 10 according to the second embodiment of the present invention was calculated by trial.

The pressure loss is about 6.0% in the gas turbine combustor according to the Comparative Example, and it reduces by about 0.3% in the gas turbine combustor 10 according to the second embodiment of the present invention due to the presence of the obstacle 50 provided in the airflow path 26a.

Providing the obstacle 50 in the airflow path 26a communicating with the opening portion 27 of the gas turbine combustor 10 according to the second embodiment increases the pressure loss due to an increase in number of resistors in the airflow path 26a. However, the pressure loss in the opening portion 27 can be reduced because the airstreams 54 and 55 form a uniform stream in the opening portion 27, where the airflow direction reverses, without collection in one region from a position close to an end cover 20 of the head portion 10a of the gas turbine combustor 10 to a position away from the end cover 20 as described above.

Since the sum of the aforementioned two effects enhances the effect of reducing the pressure loss in the opening portion 27, the pressure loss is considered to have reduced in the gas turbine combustor 10 according to the second embodiment.

Although the inner circumferential opening portions 51 formed as holes in the obstacle 50 provided in the airflow path 26a communicating with the opening portion 27 of the gas turbine combustor 10 form circles in FIG. 5, the shapes of the inner circumferential opening portions 51 are not limited to circles or rectangles, and the opening portions 51 may form ellipses or polygons. When the holes of the inner circumferential opening portions 51 form a shape that provides large peripheral surfaces, such as a star shape, turbulence of air after passage through the holes strengthens, thus further decelerating the flow.

A gas turbine combustor 10 including a combination of a pilot burner 11 and main burners 12 has been exemplified as the gas turbine combustors 10 according to the first and second embodiments of the present invention previously described. However, the configuration of the gas turbine combustor 10 according to the present invention is also applicable to a reverse-flow gas turbine combustor.

In such cases, a reduction in air pressure loss and an improvement in combustion performance by uniformly distributing air in the gas turbine combustor are the same as in the gas turbine combustor 10 according to the first or second embodiment of the present invention.

A guide plate that guides an airstream to the opening portion 27, the inner casing internal space 27a, and the airflow path 26a may be provided in the gas turbine combustor 10 according to each of the first and second embodiments of the present invention.

As previously described, in the gas turbine combustor 10 according to each of the above-mentioned embodiments of the present invention, providing an obstacle 30 or 50 having the aforementioned configuration in the airflow path 26a located upstream of the opening portion 27 and communicating with the opening portion 27 produces the following effects.

First, the flow velocity of air lowers after passage through the holes (opening portions) in the obstacle 30 on the inner circumferential side of the airflow path 26a because the flow path widens after passage through the holes. Much turbulence occurs due to the difference in flow velocity from the ambient gas. Because of the low flow velocity and much turbulence, the stream easily bends and thus flows on the outer circumferential side of the combustor interior through the inner circumference of the opening portion 27.

Air after passage through the holes (opening portions) in the obstacle 30 on the outer circumferential side of the airflow path 26a has an opening portion cross-sectional area larger than that on the inner circumferential side and a cross-sectional area, by which the holes are shielded, smaller than that on the inner circumferential side. Therefore, since the flow path that guides air widens only a little after passage through the holes (opening portions) in the obstacle 30, the flow velocity lowers only a little.

Less turbulence than on the inner circumferential side occurs because of the small contact area with the ambient gas. Since the flow velocity is higher and less turbulence occurs than on the inner circumferential side, rectilinear propagation by the inertial force is easy. Therefore, the air circulates around the outer circumference of the inner casing internal space 27a and flows on the central side of the combustor interior.

In this manner, providing an obstacle 30 or 50 in the airflow path 26a located upstream of the opening portion 27 and communicating with the opening portion 27 formed in the inner casing 18 forms a stream flowing on the inner circumferential side of the combustor interior through the inner circumferential portion of the inner casing internal space 27a, and a stream flowing on the central side at the axis of the combustor interior through the outer circumferential portion of the inner casing internal space 27a. This allows the flow of a uniform airstream through the opening portion 27 and the gas turbine combustor 10.

Since only an obstacle 30 or 50 may be provided in the airflow path 26a located upstream of the opening portion 27, the gas turbine combustor 10 has a simple structure. Locating the obstacle upstream of the opening portion 27 slightly increases the pressure loss in the obstacle 30 or 50 on the upstream side of the opening portion 27, but it can suppress the occurrence of an airflow deviation in the opening portion 27, thus reducing the airflow pressure loss over the entire gas turbine combustor.

Air uniformly flows through the gas turbine combustor 10 so that a fuel and air can be easily, uniformly mixed to improve the combustion performance, including a reduction in NOx.

According to the above-mentioned embodiments of the present invention, it is possible to attain a gas turbine combustor in which the pressure loss and the flow deviation in the flow path reversing portion of the gas turbine combustor are reduced to uniformly mix a fuel with air to reduce NOx.

### {Reference Signs List}

- 1:: compressor
- 2:: turbine
- 3:: generator
- 4:: fuel supply system
- 5:: fuel
- 6:: air
- 7:: combustion gas
- 10:: gas turbine combustor
- 10a:: combustor head portion
- 10b:: combustion chamber portion
- 10c:: combustor tail portion
- 11:: pilot burner
- 12:: main burner
- 13:: pilot nozzle
- 14:: main nozzle
- 15:: premixing nozzle
- 18:: inner casing
- 19:: outer casing
- 20:: end cover
- 21:: combustion chamber
- 22:: liner
- 23, 24:: partition
- 26, 26a:: airflow path
- 27:: opening portion
- 27a:: inner casing internal space
- 30:: obstacle
- 30a:: inner circumferential portion
- 30b:: outer circumferential portion
- 31a:: inner circumferential opening portion
- 31b:: outer circumferential opening portion
- 32a:: inner circumferential shielding portion
- 32b:: outer circumferential shielding portion
- 33:: inner/outer circumference dividing line
- 34, 35:: airstream
- 50:: obstacle
- 51:: inner circumferential opening portion
- 52:: inner circumferential shielding portion
- 54, 55:: airstream
- 57:: guide plate

## Claims

1. A gas turbine combustor (10) comprising:
a burner that injects air and a fuel,
an inner casing (18) that surrounds the burner,
an outer casing (19) that surrounds the inner casing (18), wherein
an airflow path (26) that supplies air is provided between the inner casing and the outer casing,
an opening portion (27) that introduces the air flowing down the airflow path (26) from an outer circumferential side to an inner circumferential side of the inner casing (18) of the combustor (10) is provided in a part of the inner casing (18),
an obstacle (30) that impedes flow of the air is provided in the airflow path (26) on an upstream side of the opening portion, wherein the obstacle (30) is formed by a perforated plate comprising a plurality of holes that flow a stream of the air, and wherein the obstacle (30) is configured such that an opening ratio representing a ratio of the cross-sectional area of an opening portion formed as holes in the obstacle (30) to the sum of the cross-sectional area of said opening portion formed as holes and the cross-sectional area of a shielding portion in the obstacles (30) that shields the flow of the air is low on an inner circumferential side of the obstacle (30) and high on an outer circumferential side of the obstacle (30),
**characterized in that** the holes on the inner circumferential side of the obstacle (30) are formed as a shape that provides peripheral surfaces larger than those of circular holes.

2. The gas turbine combustor (10) according to claim 1, comprising a combustor head portion (10a) having the burner and which injects air and a fuel from the burner; a combustion chamber portion (10b) having a combustion chamber (21) located downstream of the combustor head portion (10a), the combustion chamber portion (10b) mixing the fuel and the air injected from the burner and burning the fuel to generate a combustion gas in the combustion chamber (21); and a combustor tail portion (10c) having a partition located downstream of the combustion chamber portion (10b) and which forms a flow path that allows the combustion gas to flow down, the combustor tail portion (10c) allowing the combustion gas generated in the combustion chamber to flow down the flow path formed by the partition.

3. A gas turbine combustor (10) comprising:
a burner that injects air and a fuel,
an inner casing (18) that surrounds the burner,
an outer casing (19) that surrounds the inner casing (18), wherein
an airflow path (26) that supplies air is provided between the inner casing and the outer casing,
an opening portion (27) that introduces the air flowing down the airflow path (26) from an outer circumferential side to an inner circumferential side of the inner casing (18) of the combustor (10) is provided in a part of the inner casing (18),
an obstacle (30) that impedes flow of the air is provided in the airflow path (26) on an upstream side of the opening portion, wherein the obstacle (30) is formed by a perforated plate comprising a plurality of holes that flow a stream of the air, and wherein the obstacle (30) is configured such that an opening ratio representing a ratio of the cross-sectional area of an opening portion formed as holes in the obstacle (30) to the sum of the cross-sectional area of said opening portion formed as holes and the cross-sectional area of a shielding portion in the obstacles (30) that shields the flow of the air is low on an inner circumferential side of the obstacle (30),
**characterized in that** the obstacle (30) provided in the airflow path is located only on an inner circumferential side in the airflow path so as not to impede the flow of the air on an outer circumferential side in the airflow path, and a guide plate (57) that extends parallel to a longitudinal direction of the airflow path is provided on an outer circumferential end face of the obstacle (30).

4. A gas turbine combustor (10) according to claim 1 or 3, wherein, the combustor head portion (10a) injects air and a fuel from a pilot burner (11) provided at a central portion on a axial center side, and from a plurality of main burners provided on an outer circumferential side of the pilot burner (11).

5. The gas turbine combustor (10) according to claim 1, wherein the obstacle (30) is located with an inner circumferential end face connected to the outer circumference of the inner casing (18) of the combustor, and an outer circumferential end face forming a gap with an inner circumference of the outer casing (19).

## Patentansprüche

1. Gasturbinenbrennkammer (10), umfassend:
- ein Brenner, der Luft und Kraftstoff einspritzt,
- ein Innengehäuse (18), das den Brenner umgibt,
- ein das Innengehäuse (18) umgebende Außengehäuse (19), wobei ein luftzuführender Luftströmungsweg (26) zwischen dem Innengehäuse und dem Außengehäuse vorgesehen ist,
- ein in einem Teil des Innengehäuses (18) vorgesehener Öffnungsabschnitt (27), der die Luft einführt, die den Luftströmungsweg (26) von einer Außenumfangsseite zu einer Innenumfangsseite des Innengehäuses (18) der Brennkammer entlang strömt,
- ein die Strömung der Luft behinderndes Hindernis (30), das in dem Luftströmungsweg (26) an einer stromaufwärtigen Seite des Öffnungsabschnitts vorgesehen ist, wobei das Hindernis (30) durch eine perforierte Platte gebildet ist, die mehrere Löchern aufweist, die einen Luftstrom strömen lassen, und wobei das Hindernis (30) derart eingerichtet ist, dass ein Öffnungsverhältnis, das ein Verhältnis der Querschnittsfläche eines als Löcher in dem Hindernis (30) ausgebildeten Öffnungsabschnitts zu der Summe der Querschnittsfläche des als Löcher ausgebildeten Öffnungsabschnitts darstellt und die Querschnittsfläche eines Abschirmabschnitts in dem Hindernis (30), der den Luftstrom abschirmt, an einer Innenumfangsseite des Hindernisses (30) gering und an einer Außenumfangsseite des Hindernisses (30) hoch ist,
**dadurch gekennzeichnet, dass**
die Löcher an der Innenumfangsseite des Hindernisses (30) als eine Form ausgebildet sind, die Umfangsflächen bereitstellt, die größer sind als die Umfangsflächen der kreisförmigen Löcher.

2. Gasturbinenbrennkammer (10) nach Anspruch 1, umfassend:
- einen Brennkammerkopfabschnitt (10a), der den Brenner aufweist, der Luft und einen Kraftstoff von dem Brenner einspritzt;
- einen Brennkammerabschnitt (10b), der die stromabwärts des Brennkammerkopfabschnitts (10a) angeordnete Brennkammer (21) aufweist, wobei der Brennkammerabschnitt (10b) den Kraftstoff und die vom Brenner zugeführte Luft mischt und den Kraftstoff verbrennt, um in der Brennkammer (21) ein Verbrennungsgas zu erzeugen; und
- einen Brennkammerendabschnitt (10c), der eine stromabwärts des Brennkammerabschnitts (10b) angeordnete Trennwand aufweist, und die einen Strömungsweg bildet, der es dem Verbrennungsgas ermöglicht, nach unten zu strömen, wobei der Brennkammerendabschnitt (10c) es dem in der Brennkammer erzeugten Verbrennungsgas ermöglicht, den von der Trennwand gebildeten Strömungsweg entlang zu strömen.

3. Gasturbinenbrennkammer (10), umfassend:
- ein Brenner, der Luft und Kraftstoff einspritzt,
- ein Innengehäuse (18), das den Brenner umgibt,
- ein das Innengehäuse (18) umgebende Außengehäuse (19), wobei ein luftzuführender Luftströmungsweg (26) zwischen dem Innengehäuse und dem Außengehäuse vorgesehen ist,
- ein in einem Teil des Innengehäuses (18) vorgesehener Öffnungsabschnitt (27), der die Luft einführt, die den Luftströmungsweg (26) von einer Außenumfangsseite zu einer Innenumfangsseite des Innengehäuses (18) der Brennkammer entlang strömt,
- ein die Strömung der Luft behinderndes Hindernis (30), das in dem Luftströmungsweg (26) an einer stromaufwärtigen Seite des Öffnungsabschnitts vorgesehen ist, wobei das Hindernis (30) durch eine perforierte Platte gebildet ist, die mehrere Löchern aufweist, die einen Luftstrom strömen lassen, und wobei das Hindernis (30) derart eingerichtet ist, dass ein Öffnungsverhältnis, das ein Verhältnis der Querschnittsfläche eines als Löcher in dem Hindernis (30) ausgebildeten Öffnungsabschnitts zu der Summe der Querschnittsfläche des als Löcher ausgebildeten Öffnungsabschnitts darstellt und die Querschnittsfläche eines Abschirmabschnitts in dem Hindernis (30), der den Luftstrom abschirmt, an einer Innenumfangsseite des Hindernisses (30) gering ist,
**dadurch gekennzeichnet, dass**
das in dem Luftströmungsweg vorgesehene Hindernis (30) nur an einer Innenumfangsseite in dem Luftströmungsweg angeordnet ist, um die Luftströmung an einer Außenumfangsseite in dem Luftströmungsweg nicht zu behindern, und eine Führungsplatte (57), die sich parallel hinsichtlich einer Längsrichtung des Luftströmungswegs erstreckt, an einer Außenumfangsendfläche des Hindernisses (30) vorgesehen ist.

4. Gasturbinenbrenner (10) nach Anspruch 1 oder 3, wobei der Brennerkopfabschnitt (10a) Luft und Brennstoff von einem an einem zentralen Abschnitt auf einer axialen Mittenseite vorgesehenen Zündbrenner (11) und von mehreren an einer Außenumfangsseite des Zündbrenners (11) vorgesehenen Hauptbrennern einspritzt.

5. Gasturbinenbrennkammer (10) nach Anspruch 1, wobei das Hindernis (30) bezüglich einer mit dem Außenumfang des Innengehäuses (18) der Brennkammer verbundenen Innenumfangsstirnfläche und einer einen Abstand mit einem Innenumfang des Außengehäuses (19) ausbildende Außenumfangsstirnfläche angeordnet ist.

## Revendications

1. Unité de combustion de turbine à gaz (10) comprenant :
un brûleur qui injecte de l'air et un combustible,
un boîtier intérieur (18) qui entoure le brûleur,
un boîtier extérieur (19) qui entoure le boîtier intérieur (18), dans laquelle un trajet d'écoulement d'air (26) qui alimente de l'air est prévu entre le boîtier intérieur et le boîtier extérieur,
une portion d'ouverture (27), qui introduit l'air s'écoulant vers le bas dans le trajet d'écoulement d'air (26) depuis un côté circonférentiel extérieur vers un côté circonférentiel intérieur du boîtier intérieur (18) de l'unité de combustion (10), est prévue dans une partie du boîtier intérieur (18),
un obstacle (30) qui empêche l'écoulement de l'air est prévu dans le trajet d'écoulement d'air (26) sur un côté amont de la portion d'ouverture, dans laquelle
l'obstacle (30) est réalisé sous forme d'une plaque perforée comprenant une pluralité de trous qui font s'écouler un courant d'air, et dans laquelle l'obstacle (30) est configuré de sorte qu'un rapport d'ouverture représentant un rapport de l'aire de section transversale d'une portion d'ouverture réalisée sous forme de trous dans l'obstacle (30) sur la somme de l'aire de section transversale de ladite portion d'ouverture réalisée sous forme de trous et de l'aire de section transversale d'une portion de protection dans les obstacles (30) qui protège l'écoulement de l'air est faible sur un côté circonférentiel intérieur de l'obstacle (30) et est élevé sur un côté circonférentiel extérieur de l'obstacle (30),
**caractérisée en ce que** les trous sur le côté circonférentiel intérieur de l'obstacle (30) sont réalisés sous une forme qui fournit des surfaces périphériques plus grandes que celles des trous circulaires.

2. Unité de combustion de turbine à gaz (10) selon la revendication 1, comprenant une portion de tête d'unité de combustion (10a) ayant le brûleur et qui injecte de l'air et un combustible depuis le brûleur ; une portion de chambre de combustion (10b) ayant une chambre de combustion (21) située en aval de la portion de tête d'unité de combustion (10a), la portion de chambre de combustion (10b) mélangeant le combustible et l'air injecté depuis le brûleur et brûlant le combustible pour générer un gaz de combustion dans la chambre de combustion (21) ; et une portion de queue d'unité de combustion (10c) ayant une cloison située en aval de la portion de chambre de combustion (10b) et qui forme un trajet d'écoulement qui permet au gaz de combustion de s'écouler vers le bas, la portion de queue d'unité de combustion (10c) permettant au gaz de combustion généré dans la chambre de combustion de s'écouler vers le bas dans le trajet d'écoulement formé par la cloison.

3. Unité de combustion de turbine à gaz (10) comprenant :
un brûleur qui injecte de l'air et un combustible,
un boîtier intérieur (18) qui entoure le brûleur,
un boîtier extérieur (19) qui entoure le boîtier intérieur (18), dans laquelle un trajet d'écoulement d'air (26) qui alimente de l'air est prévu entre le boîtier intérieur et le boîtier extérieur,
une portion d'ouverture (27), qui introduit l'air s'écoulant vers le bas dans le trajet d'écoulement d'air (26) depuis un côté circonférentiel extérieur vers un côté circonférentiel intérieur du boîtier intérieur (18) de l'unité de combustion (10), est prévue dans une partie du boîtier intérieur (18),
un obstacle (30) qui empêche l'écoulement de l'air est prévu dans le trajet d'écoulement d'air (26) sur un côté amont de la portion d'ouverture, dans laquelle
l'obstacle (30) est réalisé sous forme d'une plaque perforée comprenant une pluralité de trous qui font s'écouler un courant d'air, et dans laquelle
l'obstacle (30) est configuré de sorte qu'un rapport d'ouverture représentant un rapport de l'aire de section transversale d'une portion d'ouverture réalisée sous forme de trous dans l'obstacle (30) sur la somme de l'aire de section transversale de ladite portion d'ouverture réalisée sous forme de trous et de l'aire de section transversale d'une portion de protection dans les obstacles (30) qui protège l'écoulement de l'air est faible sur un côté circonférentiel intérieur de l'obstacle (30),
**caractérisée en ce que** l'obstacle (30) prévu dans le trajet d'écoulement d'air est situé uniquement sur un côté circonférentiel intérieur dans le trajet d'écoulement d'air de manière à ne pas empêcher l'écoulement de l'air sur un côté circonférentiel extérieur dans le trajet d'écoulement d'air, et **en ce qu'**une plaque de guidage (57) qui s'étend parallèlement à une direction longitudinale du trajet d'écoulement d'air est prévue sur une face d'extrémité circonférentielle extérieure de l'obstacle (30).

4. Unité de combustion de turbine à gaz (10) selon la revendication 1 ou 3, dans laquelle la portion de tête d'unité de combustion (10a) injecte de l'air et un combustible depuis un brûleur pilote (11) prévu au niveau d'une portion centrale sur un côté central axial, et depuis une pluralité de brûleurs principaux prévus sur un côté circonférentiel extérieur du brûleur pilote (11).

5. Unité de combustion de turbine à gaz (10) selon la revendication 1, dans laquelle l'obstacle (30) est situé avec une face d'extrémité circonférentielle intérieure connectée à la circonférence extérieure du boîtier intérieur (18) de l'unité de combustion, et avec une face d'extrémité circonférentielle extérieure formant un intervalle avec une circonférence intérieure du boîtier extérieur (19).
